# EUROPEAN PATENT APPLICATION

(11) **EP 2 202 830 A1**
(43) Date of publication of application: **30.06.2010**
(21) Application number: 08790480.1
(22) Date of filing: 22.08.2008
(51) Int. Cl.: H01M 4/86, H01M 8/04, H01M 8/10

(54) **MEMBRANE ELECTRODE ASSEMBLY AND FUEL CELL**

(30) Priority: 10.09.2007 JP 2007234588
(71) Applicant: Fujifilm Corporation, Tokyo 106-0031 (JP)
(72) Inventor: KAWAKAMI, Hiroshi, Ashigarakami-gun Kanagawa 258-8538 (JP)
(74) Representative: HOFFMANN EITLE
(86) International application number: PCT/JP2008/002276
(87) International publication number: WO 2009/034684

(57) **Abstract**

Provided is a membrane and electrode assembly capable of maintaining the moisture content of a catalyst layer on a cathode electrode side within a suitable range. A membrane and electrode assembly comprising a pair of electrodes and an electrolyte membrane provided between the electrodes, wherein the side of each electrode adjacent to the electrolyte membrane is formed by a catalyst layer, and at least one catalyst layer comprises silica fine particles having a hydrocarbon group or a fluorine-containing organic group in the surface thereof.

## Description

### Technical Filed

The invention relates to a membrane and electrode assembly and fuel cell of a solid polymer electrolyte type and a fuel cell.

### Background Art

In recent years, in cooperation with social needs and trend against the backdrop of an energy or environmental issue, a fuel cell capable of working even at normal temperature and of yielding a high output density is noticed as a power source for electric automobile or a stationary power source. The fuel cell is a clean power generating system in which a product by the electrode reaction is water in principle and which does not substantially adversely affect the global environment. The fuel cell includes a polymer electrolyte fuel cell (PEFC), a phosphoric acid fuel cell (PAFC), an alkaline fuel cell (AFC), a solid oxide fuel cell (SOFC) and a molten carbonate fuel cell (MCFC). Of these, the polymer electrolyte fuel cell is expected as a power source for electric automobile because it works at a relatively low temperature and yields a high output density.

In general, the polymer electrolyte fuel cell has a structure in which a membrane and electrode assembly (hereinafter also referred to as "MEA") is interposed between separators. For example, MEA is composed such that an electrolyte membrane is interposed between a pair of a catalyst layer and a conductive layer (gas diffusion layer).

The catalyst layer is a porous layer formed of a mixture of an electrolyte and a conductive material on which an active metal catalyst is supported. Also, as a conductive layer, a layer by forming a carbon water-repellent layer comprising a carbon particle, a water repellent and the like on the surface of a gas diffusion substrate such as carbon cloth is used.

In the polymer electrolyte fuel cell, an electrochemical reaction proceeds in the following manner. First of all, hydrogen contained in a fuel gas which is supplied into the catalyst layer on the anode electrode side is oxidized by the active metal catalyst to form a proton and an electron as expressed in the following expression (1). Next, the formed proton goes through a proton conducting material contained in the catalyst layer on the anode electrode side and further through the electrolyte membrane coming into contact with the catalyst layer on the anode electrode side to reach the catalyst layer on the cathode electrode side. Also, the electron formed in the catalyst layer on the anode electrode side goes through a conductive material constituting the catalyst layer on the anode electrode side and further through the conductive layer contacting with the side different from the polymer electrolyte membrane of the catalyst layer on the anode electrode side and passes through a separator and an external circuit to reach the catalyst layer on the cathode electrode side. The proton and the electron, both of which have reached the catalyst layer on the cathode electrode side react with oxygen contained in an oxidizing agent gas which is supplied on the cathode electrode side by the active metal catalyst to form water as expressed in the following expression (2). The fuel cell makes it possible to take out electricity to the outside through the foregoing electrochemical reaction.

Catalyst layer on the anode electrode side:

H₂ → 2H⁺ + 2e⁻ (1)

Catalyst layer on the cathode electrode side:

1/20₂ + 2H⁺ + 2e⁻ → H₂O (2)

For that reason, the electrolyte membrane is required to have high proton conductivity, a function as a separator interposed between the electrodes and the like.

In the polymer electrolyte fuel cell, in order to efficiently transfer a proton formed in the anode electrode into the cathode electrode, it is necessary that a large quantity of water is supplied into the electrolyte membrane. This water supply is carried out by humidifying hydrogen as the fuel gas. The amount of the humidification is to be controlled appropriately. When the humidification amount is smaller than the optimal range, the output level is reduced due to a lowering of proton mobility. When the humidification amount is larger than the optimal range, excessive water covers an active site of the catalyst to prevent gas diffusion whereby the output level is reduced. Thus, the humidification condition is always required to be controlled precisely and this requirement is a burden in constructing a fuel cell system.

To solve the problem with the humidification condition, a method of making the catalyst layer, especially the catalyst layer on the cathode electrode side where water is formed through chemical reaction, contain a water-repellent substance to thereby evade the situation of excessive water retention in the catalyst layer is known in many patents (Patent Reference 1).
In these patents, it is recommended to use a fluoride or fluoride-containing carbon particles as the water-repellent substance. According to these techniques, it may be possible to evade output level reduction in a case where the degree of humidification is too high; however, in a case where the degree of humidification is low, not only the output level reduction could not be evaded but also the range of output level reduction is often enlarged.

Contrary to the above, a technique of a polymer electrolyte fuel cell drivable under a humidification-free condition is disclosed, in which hygroscopic silica fine particles or silica fibers are added to the electrolyte membrane or the catalyst layer to thereby increase the water retention in the electrolyte membrane or the catalyst layer (Patent Reference 2). This technique may contribute toward increasing the output under a humidification-free condition, but could not be applicable to an ordinary polymer electrolyte fuel cell system in which humidification is effected under important consideration of output increase, and this could not be a measure for maintaining a high output level in a case of humidification fluctuation in the system.
Accordingly, in a high-power polymer electrolyte fuel cell, a method is desired for maintaining the moisture content of the catalyst layer on a suitable level and for maintaining the high output level thereof even though the humidification degree may unintentionally fluctuate therein.

On the other hand, it is known that silica not processed for chemical modification in the surface thereof has a hydrophilic hydroxyl group in the surface and is therefore hygroscopic, but it may become repellent to water through chemical modification in the surface thereof with a hydrocarbon group or a fluorine-containing organic group (Non-Patent Reference 1). However, it has been considered that, as the catalyst layer for the electrode of a fuel cell, silica fine particles themselves could not be expected to be strongly repellent to water like a fluoride resin, and therefore it has been considered that even when the chemically-modified silica fine particles are added to the catalyst layer, the cell performance could not be enhanced.

[Patent Reference 1] Japanese Patent 3245929
[Patent reference 2] JP-A 6-111827
[Non-Patent Reference 1] Technique for Ultra-hydrophilication, ultra-water-repellent finish [Chem.1]

### Disclosure of the Invention

### Problems to be Solved by the Invention

An object of the invention is to provide a measure for maintaining the moisture content of the catalyst layer on the cathode electrode side of a fuel cell to fall within a suitable range, thereby providing a measure for maintaining a high output level stably to the fluctuation of the humidification condition in the cell.

### Means for Solving the Problems

The inventors have assiduously studied taking the above-mentioned problems into consideration and, as a result, have found that the problems can be solved by the following measures.
(1) A membrane and electrode assembly comprising a pair of electrodes and an electrolyte membrane provided between the electrodes, wherein the side of each electrode adjacent to the electrolyte membrane is formed by a catalyst layer, and at least one catalyst layer comprises silica fine particles having a hydrocarbon group or a fluorine-containing organic group in the surface thereof.
(2) The membrane and electrode assembly of (1), wherein the mean value of the primary particle diameter of the silica fine particles is at most 50 nm.
(3) The membrane and electrode assembly of (1) or (2), wherein the silica fine particles are in the catalyst layer in an amount of from 0.6 to 25% by weight.
(4) The membrane and electrode assembly of any one of (1) to (3), wherein the fluorine-containing organic group is a monovalent organic group having at least two fluorine atoms and has from 3 to 16 carbon atoms.
(5) The membrane and electrode assembly of any one of (1) to (3), wherein the fluorine-containing organic group is a polyfluoroalkyl group, a polyfluorooxaalkyl group, a polyfluorothioxaalkyl group, or an organic group composed of any of these groups and a divalent hydrocarbon group bonding thereto.
(6) The membrane and electrode assembly of any one of (1) to (5), wherein the silica fine particles have the hydrocarbon group or the fluorine-containing organic group in an amount of from 1.5 × 10⁻⁶ to 1.5 × 10⁻³ mols per gram of the particles.
(7) The membrane and electrode assembly of any one of (1) to (6), wherein the catalyst layer comprising the silica fine particles is provided on a cathode electrode.
(8) A fuel cell comprising the membrane and electrode assembly of any one of (1) to (7).

### Advantageous Effects of the Invention

According to the constitution of the invention, the moisture content of the catalyst layer on the cathode electrode side can be kept within a suitable range irrespective of the humidification condition for it, and the cell can stably maintain a high output level.

### Brief Description of the Drawings

[Fig. 1] This is a diagrammatic cross-sectional view showing one example of a configuration of a membrane and electrode assembly.
[Fig. 2] This is a diagrammatic cross-sectional view showing one example of a structure of a fuel cell.

### Description of Reference Numerals and Signs

- 10: Membrane and Electrode Assembly (MEA)
- 11: Electrolyte Membrane
- 12: Anode Electrode
- 12a: Conductive Layer of Anode Electrode
- 12b: Catalyst Layer of Anode Electrode
- 13: Cathode Electrode
- 13a: Conductive Layer of Cathode Electrode
- 13b: Catalyst Layer of Cathode Electrode
- 14: Gasket
- 15: Vapor Supply and Exhaust Opening on Anode Electrode Side
- 16: Vapor Supply and Exhaust Opening on Cathode Electrode Side
- 17: Collector

### Best Mode for Carrying out the Invention

The contents of the invention are hereunder described in detail. In this specification, numerical value ranges expressed by the term "to" mean that the numerical values described before and after it are included as a lower limit and an upper limit, respectively.
In this specification, "group" of an alkyl group and others may have or may not have a substituent not overstepping the scope and the sprit of the invention. The group in which the umber of the carbon atoms is limited, the carbon number includes the number of the carbon atoms of the substituent.

The characteristic feature of the invention is that the moisture content of the catalyst layer is stabilized within a suitable range by adding silica fine particles having a hydrocarbon group or a fluorine-containing organic group in the surface thereof to the catalyst layer on the cathode electrode side, thereby realizing a fuel cell capable of producing a high output power stably to the fluctuation of the humidification condition therein. In the related prior art, the moisture content controlling agent for the catalyst layer is applied only to any one of a case where the humidification condition is for higher humidification than the optimum condition or, on the contrary, a case where the humidification condition is for lower humidification than the optimum condition for output increase, and its application capability to humidification condition fluctuation in a broader amplitude range is insufficient.
Using the silica fine particles having a hydrocarbon group or a fluorine-containing organic group in the surface thereof as a moisture controlling agent for the catalyst layer, the invention has made it possible to maintain a high output level of a fuel cell both in a case of full humidification driving condition where the take-out current amount is large and flooding of water formed by the catalyst layer on the cathode electrode side occurs frequently, and in a case of low humidification driving condition where the electrolyte could hardly maintain the ionic conductivity therein.

As described above, the silica fine particles used in the related prior art are not chemically modified in the surface thereof, and the function thereof as a water-absorbing agent or a water-retaining agent is utilized. In the case, it is recommended to use fine particles, and the reason is because those having a larger specific surface area could have a larger number of sites of expressing water retentive effect and are therefore expected to exhibit a larger water retentive activity.
On the other hand, it has heretofore been known to chemically modify the surface of silica with a hydrocarbon group or a fluorine-containing organic group to thereby make the surface of silica repellent to water; however, heretofore a trial of applying the silica fine particles chemically modified with a hydrocarbon group or a fluorine-containing organic group in the surface thereof to the catalyst layer of a fuel cell as a water-repellent agent thereto has not almost been made. The reason is because it has heretofore been considered that the silica fine particles could not be expected to exhibit strong water repellency like a fluoride resin.
Accordingly, the effect of the invention attained by adding silica fine particles having a hydrocarbon group or a fluorine-containing organic group in the surface thereof (hereinafter this may be referred to as "silica fine particles for use in the invention") to the catalyst layer on the cathode electrode side could hardly be derived by analogy from known patents, literature, etc.

Further, the effect of the invention could be attained only slightly with silica fine particles having a primary particle diameter of 1 µm, but on the other hand, the effect may steeply rise in the region where the particle size is smaller than the boundary level of 50 nm or so, and this behavior makes it difficult to derive the present invention by analogy from conventional knowledge.

The amount of the hydrocarbon group or the fluorine-containing organic group to exist in the surface of the silica fine particles to be in the catalyst layer on the cathode electrode side in the invention is preferably within a range of from 1.5 × 10⁻⁶ to 1.5 × 10⁻³ mols per gram of the silica fine particles, more preferably from 7.5 × 10⁻⁵ to 7.5 × 10⁻⁴ mols. The range is preferred as attaining the effect of preventing the output level depression by flooding to occur in a case where the humidification degree is too high or the take-out current value is increased.

The method of giving a hydrocarbon group or a fluorine-containing organic group to the surface of the silica fine particles for use in the invention is not specifically defined; however, the group may be relatively easily given thereto according to a method of using a silane compound.
The silane compound may be represented by:

(R¹)ₐ(R²)_{b}(R³)_{c}Si(X)_{4-a-b-c}

R¹, R² and R³ each independently represent a hydrogen atom or a monovalent hydrocarbon group having from 1 to 16 carbon atoms, or a fluorine-containing organic group, and at least one of R¹, R² and R³ is a hydrocarbon group or a fluorine-containing organic group.
X represents a halogen atom (e.g., chlorine atom, bromine atom, iodine atom) an alkoxy group, an acyloxy group, an alkoxy group substituted by an alkoxy group, an aminoxy group, an amide group or an isocyanate group.
a, b and c each independently indicate an integer of from 0 to 3, and 1 ≤ a + b + c ≤ 3. In case were 4 - a - b - c is 2 or 3, plural X's may be the same or different.
In case where R¹, R² and R³ are a fluorine-containing organic group, preferred is a hydrocarbon group derived from the following monovalent organic group by substituting at least one hydrogen atom therein with a fluorine atom, and more preferably, the group contains at least two fluorine atoms.

### (Examples of Monovalent Organic Group)

Monovalent hydrocarbon group such as alkyl group, alkenyl group, cycloalkyl group, aryl group, etc.; monovalent halogenohydrocarbon group such as chloroalkyl group, etc.; monovalent (halogeno)hydrocarbon group having epoxy group, amino group, mercapto group; monovalent (optionally-halogenated) hydrocarbon group having a linking bond such as ester bond, ether bond, thioether bond, imino bond, amido bond or the like in the carbon chain thereof.

In case where the fluorine-containing organic group is a monovalent organic group having at least two fluorine atoms, preferred is a polyfluoroalkyl group, a polyfluorooxaalkyl group, a polyflorothioxaalkyl group, or an organic group composed of any of these groups and a divalent hydrocarbon group such as an alkylene group or the like bonding thereto via a linking bond such as an ester bond or the like (in which the divalent hydrocarbon group bonds to the silicon atom at the opposite end to the linking bond).
Also preferably, the end of the polyfluoroalkyl group, the polyfluorooxaalkyl group or the polyflorothioxaalkyl group bonding to the silicon atom (including its peripheral moiety) is an alkylene group (especially an ethylene group.), and in the other part thereof, all hydrogen atoms are substituted with fluorine atoms (hereinafter this may be referred to as "perfluoro-organic group").
The perfluoro-organic group is preferably a perfluoroalkyl group, a perfluorooxaalkyl group or a perflorothioxaalkyl group having at least 3 carbon atoms, more preferably a perfluoroalkyl group having from 3 to 16 carbon atoms.
The method of reacting the surface of silica fine particles with the silane compound includes a method of directly contacting the silane compound with silica fine particles; a method of directly contacting the silane compound with silica fine particles in a dry atmosphere optionally followed by contacting the particles with water for removing the excessive component; a method of dispersing silica fine particles in a solution of the silane compound, then evaporating the solvent, and thereafter treating the particles with water or water vapor; a method of previously hydrolyzing the silane compound in the presence of water followed by contacting it with silica fine particles or mixing them it with silica fine particles according to various methods, etc. In the above-mentioned methods, the system may be optionally heated for promoting the reaction.

Preferably, the primary particle diameter of the silica fine particles is at most 50 nm on an average (in case where the silica fine particles have a hydrocarbon group or a fluorine-containing organic group in the surface thereof, the size covers only the part of silica fine particle), more preferably at most 20 nm. The lowermost limit of the diameter of the silica fine particles is not specifically defined, but in fact, particles having a diameter of less than 5 nm are difficult to prepare; and therefore, in general, the diameter is at least 5 nm. In particular, in case where the silica fine particles for use in the invention have a hydrocarbon group or a fluorine-containing organic group given thereto, the mean diameter of the particles including the hydrocarbon group or the fluorine-containing organic group is preferably from 7 to 56 nm.

The content of the silica fine particles having a hydrocarbon group or a fluorine-containing organic group in the surface thereof, in the catalyst layer on the cathode electrode side is preferably from 0.6 to 25% by weight, more preferably from 2 to 12% by weight. The range has the advantage of efficiently producing the effect of the invention with preventing the output depression owing to the reduction in the weight ratio of the catalyst in the catalyst layer.
The amount of the hydrocarbon group or the fluorine-containing organic group to exist in the surface of the silica fine particles is preferably within a range of from 1. 5 × 10⁻⁶ to 1.5 × 10⁻³ mols per gram of the silica fine particles, more preferably from 7.5 × 10⁻⁵ to 7.5 × 10⁻⁴ mols as so mentioned in the above; and the optimum range of the surface chemical-modifying group is considered to be either the optimum amount for imparting suitable water repellency to the binder in the catalyst layer that holds moisture therein, or the amount to bring about the optimum numerical ratio of the surface hydrophilic/oleophilic group for stabilizing the moisture content of the catalyst layer.

### <<Electrolyte Mernbrane>>

As the electrolyte membrane in the invention, any one prepared by forming a known electrolyte into a membrane, or any known electrolyte membrane may be used widely.
Of those, fluorine based polymers are excellent in chemical stability so that they can be preferably used as the electrolyte. For example, those in which a main chain of a polymer constituting the electrolyte has a chemical structure of any one of - (CF₂-CF₂)ₙ- and - (CF₂-CF₂)ₓ- (CH₂-CH₂)_{y}- (wherein n, x and y are each an integer) are preferable. Specific examples thereof include perfluorosulfonic acid membranes having high proton conductivity, which are known as trade names including NAFION (a registered trademark, manufactured by DuPont), ACIPLEX (a registered trademark, manufactured by Asahi Kasei Corporation) and FLEMION (a registered trademark, manufactured by Asahi Glass Co., Ltd.).

In the present invention, as the conductive material, a sulfoalkylated aromatic hydrocarbon based polymer having an aromatic ring into the main chain may be used. In particular, preferable is a sulfoalkylated aromatichy drocarbon having a sulfoalkyl group represented by the following formula (1) into a side chain thereof.
Specific examples of a sulfoalkylated aromatic hydrocarbon based polymer include engineering plastics such as polyetheretherketone (PEEK) having a structural unit represented by the following formula (2) which is developed by ICI, UK in 1977; semi-crystalline polyaryletherketone (PEEK) which is developed by BASF, Germany; polyetherketone (PEK) having a structural unit represented by the following formula (3) which is sold by Sumitomo Chemical Co., Ltd., etc.; polyketone (PK) which is sold by Teijin Amoco Engineering Plastic Ltd. ; polyethersulfone (PES) having a structural unit represented by the following formula (4) which is sold by Sumitomo Chemical Co., Ltd., Teijin Amoco Engineering Plastics Ltd., Mitsui Chemicals Inc., etc.; polysulfone (PSU) having a structural unit represented by the following formula (5) which is sold by Solvay Advanced Polymers K.K. ; linear or crosslinked polyphenylene sulfide (PPS) having a structural unit represented by the following formula (6) which is sold by Tory Industries, Inc. , Dai Nippon Chemical Industries Inc., Toopren K.K., Idemitsu petrochemical Co., Ltd., Kureha Corporation, etc.; and denatured polyphenylene ether (PPE) having a structural unit represented by the following formula (7) which is sold by Asahi Kasei Corporation, GE Plastics Japan Ltd., Mitsubishi Engineering-Plastics Corporation and Sumitomo Chemical Co., Ltd.; or aromatic hydrocarbon based polymers having a sulfoalkyl group represented by the following formula (1) introduced into a side chain of a polymer alloy thereof.
Of these, from the viewpoint of resistance to oxidative deterioration of the main chain, the main chain is preferably PEEK, PEAK, PEK, PK, PIPS, PES and PSU.

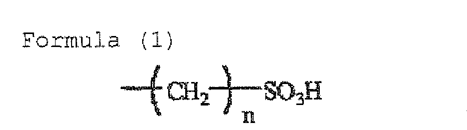

wherein n is 1, 2, 3, 4, 5 or 6. 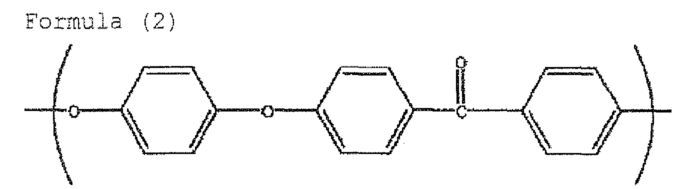 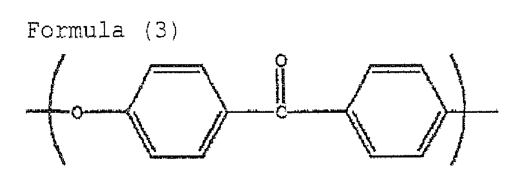 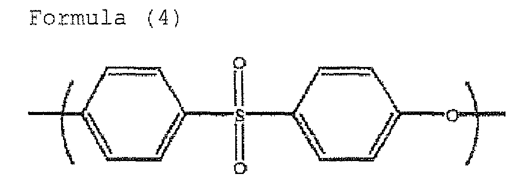 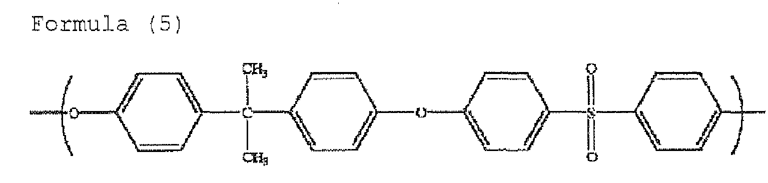 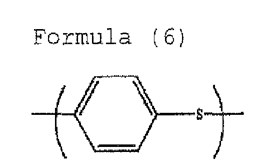 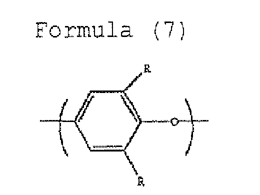 wherein R represents a lower alkyl group such as a methyl group and an ethyl group, or a phenyl group.

In the inventionm as the conductive material, a sulfonic acid type polystyrene-graft-ethylene tetrafluoroethylene copolymer (PTFE) constituted of a main chain prepared by copolymerization of a fluorocarbon based vinyl monomer and a hydrocarbon based vinyl monomer and a sulfonic group-containing hydrocarbon based side chain as disclosed in JP-A-9-102322; a sulfonic acid type polystyrene-graft-ETFE as disclosed in JP-A-9-102322; a sulfonic acid type poly(trifluorostyrene)-graft-ETFE formed into an electrolyte membrane by graft polymerizing α,β,β-trifluorostyrene on a membrane prepared by copolymerization of a fluorocarbon based vinyl monomer and a hydrocarbon based vinyl monomer to introduce a sulfonic group as disclosed in U.S. Patent No. 4, 012,303 and U.S. Patent No. 4,605,685; and the like can also be used.

The ion exchange capacity of the electrolyte membrane for use in the invention is preferably from 0.40 to 4.00 milliequivalents/g, more preferably from 0.6 to 3.4 milliequivalents/g, even more preferably from 1.00 to 2.9 milliequivalents/g. The ion exchange capacity of at least 0.40 milliequivalents/g is preferred as enhancing the output capacity of the assembly; and the ion exchange capacity of at most 4.00 miliiequivalents/g is preferred as enhancing the water resistance of the electrolyte membrane.

The ion exchange group-equivalent weight as referred to in the invention means the molecular weight of the electrolyte polymer per the unit mol of the introduced, ion-exchanging functional group; and the polymer having a smaller value of the weight has a higher ion-exchanging functional group content. The ion exchange group-equivalent weight may be determined through ¹H-NMR spectroscopy, elementary analysis, acid-base titration as in JP-B 1-52866, water-free acid-base titration (in which the normal solution is benzene-methanol solution of potassium methoxide), etc.

In general, electrolyte in the form of the electrolyte membrane is employed to fabricate a fuel cell. Though fabrication method is not particularly limited, a method of achieving fabrication from a solution state (a solution casting method), a method of achieving fabrication from a molten state (a melt pressing method or a melt extrusion method) and the like can be employed. Specifically, as to the former, the fabrication can be achieved by, for example, cast coating a solution containing an ion exchange polymer as the electrolyte on a glass plate and removing a solvent. The solvent to be used for the fabrication is not particularly limited so far as it is able to dissolve an ion exchange polymer as the electrolyte therein and be then removed. Examples of the solvent which can be favorably used include aprotic polar solvents such as N,N'-dimethylformamide, N,N'-dimethylacetamide, N-methyl-2-pyrrolidone and dimethyl sulfoxide; alkylene glycol monoalkyl ethers such as ethylene glycol monomethyl ether, ethylene glycol monoethyl ether, propylene glycol monomethyl ether and propylene glycol monoethyl ether; halogen based solvents such as dichloromethane and trichloroethane; and alcohols such as isopropyl alcohol and tert-butyl alcohol.

Though a thickness of the electrolyte membrane of the invention is not particularly limited, it is preferably from 10 to 300 µm, more preferably from 10 to 200 µm, and further preferably from 30 to 100 µm. When the thickness of the electrolyte membrane is 10 µm or more, the electrolyte membrane has a strength more suitable for practical use; and when it is not more than 300 µm, a reduction in the membrane resistance, namely an enhancement in the power generating performance tends to be enhanced, and therefore, such range is preferable.
In the case of the solution casting method, the thickness of the electrolyte membrane can be controlled by regulating the concentration of the solution of the ion exchange polymer as the electrolyte or regulating the thickness for coating on a substrate. In the case of the fabrication from a molten state, the thickness of the electrolyte membrane can be controlled by stretching a film having a prescribed thickness as obtained by a melt pressing method, a melt extrusion method or the like in a prescribed stretch ratio.

### <<Other components of electrolyte membrane>>

The electrolyte membrane of the invention may include additives which are used for usual polymers, such as a plasticizer, a stabilizer and a release agent can be used within the range where the object of the invention is not hindered.

To the solid electrolyte of the invention, according to need, an oxidation inhibitor, a fiber, a fine particle, a water-absorbing agent, a plasticizer, a compatibilizing agent or the like may be added in order to enhance film properties. The content of these additives is preferably in a range of 1 to 30% by mass relative to the total amount of the solid electrolyte.

Preferable examples of the oxidation inhibitor include (hindered) phenol-based, mono- or di-valent sulfur-based, tri- or penta-phosphorous-based, benzophenone-based, benzotriazole-based, hindered amine-based, cyanoacrylate-based, salicylate-based, and oxalic acid anilide-based compounds. Specifically, compounds described in JP-A-8-53614, JP-A-10-101873, JP-A-11-114430 and JP-A-2003-151346 can be mentioned.

Preferable examples of the fiber include perfluorocabon fiber, cellulose fiber, glass fiber, polyethylene fiber and the like. Specifically, fibers described in JP-A-10-312815, JP-A-2000-231928, JP-A-2001-307545, JP-A-2003-317748, JP-A-2004-63430 and JP-A-2004-107461 can be mentioned.

Preferable examples of the fine particle include fine particles composed of silica, alumina, titanium oxide, zirconium oxide and the like. Specifically, those described in JP-A-6-111834, JP-A-2003-178777, and JP-A-2004-217921 can be mentioned.

Preferable examples of the water-absorbing agent (hydrophilic material) include cross-linked polyacrylates, starch-acrylates, poval, polyacrylonitrile, carboxymethyl cellulose, polyvinylpyrrolidone, polyglycol dialkylether, polyglycol dialkylester, silica gel, synthesized zeolite, alumina gel, titania gel, zirconia gel, and yttria gel. Specifically, water-absorbing agents described in JP-A-7-135003, JP-A-8-20716 and JP-A-9-251857 can be mentioned.

Preferable examples of the plasticizer include phosphoric acid ester-based compounds, phthalic acid ester-based compounds, aliphatic monobasic acid ester-based compounds, aliphatic dibasic acid ester-based compounds, dihydric alcohol ester-based compounds, oxyacid ester-based compounds, chlorinated paraffins, alkylnaphthalene--based compounds, sulfone alkylamide-based compounds, oligo ethers, cabonates, and aromatic nitriles. Specifically, those described in JP-A-2003-197030, JP-A-2003-288916, and JP-A-2003-317539 can be mentioned.

Further, the solid electrolyte of the invention may be incorporated with various polymer compounds for the purpose of (1) enhancing mechanical strength of the film, or (2) enhancing acid concentration in the film.
(1) For the purpose of enhancing mechanical strength, such polymer compound is suitable that has molecular weight of around 10,000 to 1,000,000 and good compatibility with the solid electrolyte of the invention. For example, perfluorinated polymer, polystyrene, polyethylene glycol, polyoxetane, poly(meth)acrylate, polyether ketone, polyether sulfone, and polymers of 2 or more of these are preferable, and preferable content is in a range of 1 to 30% by mass relative to the whole.
   A compatibilizing agent has a boiling point or sublimation point of preferably 250°C or more, and more preferably 300°C or more.
(2) For the purpose of increasing acid concentration, such polymer compound is preferable that has a proton acid site such as perfluorocarbon sulfonic acid polymers as represented by NAFION (a registered trademark), poly (meth) acrylates having a phosphoric acid group in a side chain, or sulfonated heat resistant aromatic polymers such as sulfonated polyether ether ketone, sulfonated polyether sulfone, sulfonated polysulfone or sulfonated polybenzimidazole, which is preferably contained in a range of 1 to 30% by mass relative to the whole.

As to properties of the electrolyte membrane to be used in the invention, those having the following various performances are preferable.
An ionic conductivity is preferably 0.005 S/cm or more, and more preferably 0.01 S/cm or more at 25°C and 95 % RH.
As to the strength, for example, a tensile strength is preferably 10 MPa or more, and more preferably 20 MPa or more.

As to the electrolyte membrane to be used in the invention, one having stable water absorption and water content is preferable. It is preferable that the solubility of the electrolyte membrane to be used in invention is of a substantially negligible degree against alcohols, water and a mixed solvent thereof. It is preferable that when the electrolyte membrane to be used in the invention is dipped in the foregoing solvent, a loss in weight and a change in form are of a substantially negligible degree.
In the case of forming a membrane, as to the ion conducting direction, it is preferable that a direction from the front surface toward the rear surface is higher than other directions. However, the ion conducting direction may be random.
A heat resistant temperature of the electrolyte membrane to be used in the invention is preferably 200°C or higher, more preferably 250°C or higher, and further preferably 300°C or higher. For example, the heat resistant temperature can be defined as a time when it reaches a loss in weight of 5 % upon heating at a rate of 1°C/min. This loss in weight is calculated by eliminating a volatile matter such as water.

Further, when the solid electrolyte of the invention is used for a fuel cell, an active metal catalyst that facilitates the oxidation-reduction reaction of an anode fuel and a cathode fuel may be added. As the result, fuels permeating into the solid electrolyte tend to be consumed in the solid electrolyte without preaching the other electrode, whereby crossover can be prevented. As active metal type to be used, an active metal catalyst as described after is suitable and, platinum or an alloy based on platinum is preferable.

### <<Configuration of fuel cell>>

Next, the membrane and electrode assembly of the invention and the fuel cell using the membrane and electrode assembly are described.

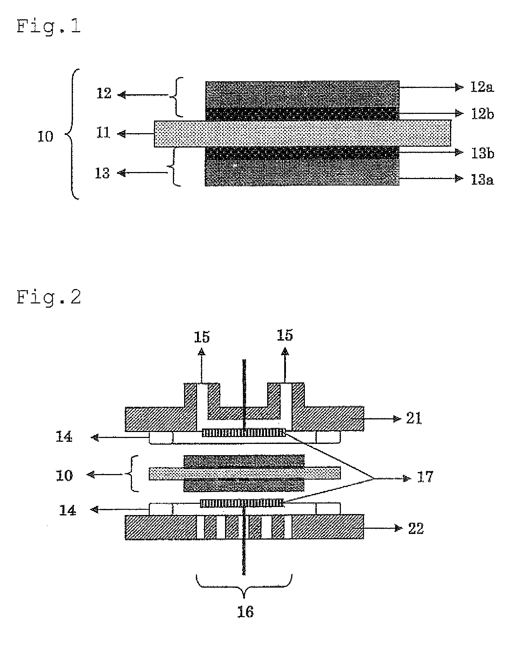

Fig. 1 shows one examples of a cross-sectional diagrammatic view of the membrane and electrode assembly of the invention. MEA 10 is provided with an electrolyte membrane 11 and an anode electrode 12 and a cathode electrode 13 interposing the electrolyte membrane 11 therebetween and opposing to each other.
The anode electrode 12 and the cathode electrode 13 are composed of, for example, conductive layers 12a and 13a and catalyst layers 12b and 13b, respectively. The catalyst layers 12b and 13b each contains an active metal catalyst-carried conductive material and an ionic polymer particle dispersion liquid. For the purpose of bringing the catalyst layers 12b and 13b into intimate contact with the electrolyte membrane 11, a method in which the catalyst layers 12b and 13b are coated on the conductive layer sheets 12a and 13a, respectively, followed by contact bonding on the electrolyte membrane 11 by a hot pressing method (preferably at from 120 to 250°C and from 2 to 100 kg/cm²), or a method in which the catalyst layers 12b and 13b are coated on an appropriate support and subjected to contact bonding while transferring onto the electrolyte membrane 11, followed by interposing between the conductive layers 12a and 13a is generally employed. However, the membrane and electrode assembly of the invention necessary requires the conductive layers as long as it has the catalyst layers.

Fig. 2 shows one example of a structure of the fuel cell. The fuel cell has an MEA 10, a pair of collectors 17 composed of a separator and gaskets 14. The collector 17 on the anode electrode side is provided with a supply and exhaust opening 15 on the anode electrode side; and the collector 17 on the cathode electrode side is provided with a supply and an exhaust opening 16 on the cathode electrode side. A gas fuel such as hydrogen and an alcohol (for example, methanol) or a liquid fuel such as an alcohol aqueous solution is supplied from the supply and exhaust opening 15 on the anode electrode side; and an oxidizing agent gas such as an oxygen gas and air is supplied from the supply and exhaust opening 16 from the cathode electrode side.

The catalyst layer for the membrane and electrode assembly 10 is composed of an conductive material that carries an active metal catalyst, and may contain, if desired, a water repellent and a binder. A layer (conductive layer) comprising an conductive material not carrying a catalyst and optionally a water repellent and a binder may be formed on the outer side of the catalyst layer. For the catalyst layer, used is an active metal catalyst supported by an conductive material. The active metal catalyst may be any metal capable of promoting oxidation of hydrogen and reduction of oxygen, and includes, for example, platinum, gold, silver, palladium, iridium, rhodium, ruthenium, iron, cobalt, nickel, chromium, tungsten, manganese, vanadium and their alloys. Of those catalysts, in particular, platinum is used mostly.
The particle size of the active metal catalyst generally used is within a range of from 2 to 10 nm. The catalyst having a smaller particle size is more advantageous since the surface area pr the unit mass thereof may be large and the activity thereof may be therefore high; however, if too small, the catalyst particles could hardly be dispersed with no aggregation. Accordingly, the particle size is preferably at least 2 nm.

Activated polarization in a hydrogen-oxygen system fuel cell is greater for a cathode pole side (air pole side) compared with anode pole side (hydrogen pole side). This is because reaction at the cathode pole side (reduction of oxygen) is slower compared with that at the anode pole side. In order to enhance activity of the cathode pole side, various platinum-based bimetallic catalysts such as Pt-Cr, Pt-Ni, Pt-Co, Pt-Cu, Pt-Fe can be used. In a fuel cell which employs a reformed gas from fossil fuels containing carbon monoxide as anode fuel, suppression of catalyst poisoning by CO is important. For this purpose, platinum-based bimetals such as Pt-Ru, Pt-Fe, Pt-Ni, Pt-Co and Pt-Mo, and trimetallic catalyst such as Pt-Ru-Mo, Pt-Ru-W, Pt-Ru-Co, Pt-Ru-Fe, Pt-Ru-Ni, Pt-Ru-Cu, Pt-Ru-Sn and Pt-Ru-Au can be used.

The conductive material to support the active metal catalyst may be any electroconductive substance and includes, for example, various metals and carbon materials. The carbon materials include, for example, carbon black such as furnace black, channel black, acetylene black, etc.; active carbon, graphite, etc. One or more of these may be used here either singly or as combined. Especially preferred are acetylene black, Vulcan XC-72, Ketjen black, carbon nanohorns (CNH), carbon nanotubes (CNT).

The functions of the electrode are: (1) to transport the fuel to the active metal, (2) to provide a field for oxidation reaction (anode pole) and reduction reaction (cathode pole) of the fuel, (3) to transmit electrons generated by oxidation-reduction to the current collector, and (4) to transport protons generated by the reaction to the solid electrolyte. In order to accomplish (1), the catalyst layer must be porous to allow the liquid and gas fuels to permeate deeply. (2) is borne by the aforementioned active metal catalyst, and (3) is borne by the also aforementioned carbon material. In order to fulfill the function of (4), the catalyst layer is mixed with a proton conductive material.

Here, the binder of the catalyst layer is not limited so far as it is a solid having a proton donating group. Examples of polymer compounds having an acid residue which can be used in the electrolyte membrane include perfluorocarbon sulfonic acid polymers represented by NAFION (a registered trademark) ; poly(meth)acrylates having a phosphoric acid group in a side chain thereof; sulfonated polyetheretherketone; sulfonated polyetherketone; sulfonated polyethersulfone; sulfonated polysulfone; heat-resistant aromatic polymers such as sulfonated polybenzimidazole; sulfonated polystyrene, sulfonated polyoxetane; sulfonated polyimides; sulfonated polyphenylene sulfide; sulfonated polyphenylene oxide; and sulfonated polyphenylene. Specific examples thereof include those described in JP-A-2002-110174, JP-A-2002-105200, JP-A-2004-10677, JP-A-2003-132908, JP-A-2004-179154, JP-A-2004-175997, JP-A-2004-247182, JP-A-2003-147074, JP-A-2004-234931, JP-A-2002-289222 and JP-A-2003-208816.

Preferably, the catalyst layer further contains a water repellent. As the water repellent, for example, preferred are fluorocarbon, water-repellent fluororesin, and more preferred are those excellent in heat resistance and oxidation resistance. For example, herein usable are polytetrafluoroethylene, tetrafluoroethylene-perfluoroalkyl vinyl ether copolymer, tetrafluoroethylene-hexafluoropropylene copolymer, etc.

As to the use amount of the active metal catalyst, a range of from 0.03 to 10 mg/cm² is suitable from the viewpoints of cell output and economy. The amount of the conductive material for supporting the active metal catalyst is suitably from 1 to 10 times the mass of the active metal catalyst. The amount of a proton conducting material as the binder of the catalyst layer is suitably from 0.1 to 2 times the mass of the conductive material for supporting the active metal catalyst.

The conductive layer is also called an electrode substrate, a transmission layer or a backing layer, and is preferably one having a collection function and playing a role for preventing deterioration of the gas transmission to be caused due to gathering of water. In general, the conductive layer is carbon paper, or a carbon cloth. A material prepared by a treatment with polytetrafluoroethylene (PTFE) for the purpose of making it water-repellent can be used, too.

In the invention, silica fine particles having a hydrocarbon group or a fluorine-containing organic group in the surface thereof are added to the catalyst layer on the cathode electrode side, and further as combined with these, a water repellent excellent in heat resistance and oxidation resistance such as fluororesin or the like may be added to the layer. Adding silica fine particles having a hydrocarbon group or a fluorine-containing organic group in the surface thereof also to the catalyst layer on the anode electrode side is a preferred embodiment.

Examples of a method for carrying the active metal catalyst include a heat reduction method, a sputtering method, a pulse laser deposition method and a vacuum vapor deposition method (see, for example, WO 2002/054514).

Next, a preparation method of an anode electrode and a cathode electrode is described. A dispersion liquid (catalyst layer coating solution) prepared by dissolving the proton conductive material as represented by NATION into a solvent and mixing it with the active metal catalyst-supported conductive material is dispersed.
Examples of the solvent of the dispersion which is preferably used include heterocyclic compounds (for example, 3-methyl-2-oxazolidinone and N-methylpyrrolidone); cyclic ethers (for example, dioxane and tetrahydrof uran) ; chain ethers (for example, diethyl ether, ethylene glycol dialkyl ethers, propylene glycol dialkyl ethers, polyethylene glycol dialkyl ethers and polypropylene glycol dialkyl ethers); alcohols (for example, methanol, ethanol, isopropanol, ethylene glycol monoalkyl ethers, propylene glycol monoalkyl ethers, polyethylene glycol monoalkyl ethers and polypropylene glycol monoalkyl ethers); polyhydric alcohols (for example, ethylene glycol, propylene glycol, polyethylene glycol, polypropylene glycol and glycerin); nitrile compounds (for example, acetonitrile, glutarodinitrile, methoxyacetonitrile, propionitrile and benzonitrile); non-polar solvents (for example, toluene and xylene); chlorine based solvents (for example, methylene chloride and ethylene chloride); amides (for example, N,N-dimethylformamide, N,N-dimethylacetamide and acetamide); and water. Of these, heterocyclic compounds, alcohols, polyhydric alcohols and amides are especially preferably used.

The dispersion may be carried out by stirring, and ultrasonic dispersion, a ball mill and the like may also be used. The resulting dispersion liquid may be coated by using a coating method such as a curtain coating, extrusion coating, roll coating, spin coating, dip coating, bar coating, spray coating, slide coating and print coating methods.

Coating of the dispersion liquid will be described. In a coating process, a film may be formed by extrusion molding, or casting or coating of the above-described dispersion liquid. A support in this case is not particularly restricted, and preferable examples thereof include a glass substrate, a metal substrate, a polymer film, a reflection board and the like. Examples of the polymer film include a film of cellulose-based polymers such as triacetyl cellulose (TAG), ester-based polymers such as polyethylene terephthalate (PET) and polyethylene naphthalate (PEN), fluorine-containing polymers such as polytrifluoroethylene (PTFE), and polyimide. The coating may be carried out according to a known system such as a curtain coating, extrusion coating, roll coating, spin coating, dip coating, bar coating, spray coating, slide coating and print coating methods. In particular, use of a conductive porous material (carbon paper, carbon cloth) as the support makes direct manufacture of the catalyst electrode possible.

These operations may be carried out by a film-forming machine that uses rolls such as calendar rolls or cast rolls, or a T die, or press molding by a press machine may also be utilized. Further, a stretching process may be added to control the film thickness or improve film characteristics. As another method, a method, in which an electrode catalyst having been formed in a paste shape as described above is directly sprayed to the solid electrolyte film with an ordinary sprayer to form the catalyst layer, can be also used. Control of the spray time and the spray volume makes formation of a uniform electrode catalyst layer possible.

Drying temperature in the coating process relates to the drying speed, and can be selected in accordance with properties of the material. It is preferably -20°C to 150°C, more preferable 20°C to 120°C, and further preferably 50°C to 100°C. A shorter drying time is preferable from the viewpoint of productivity, however, a too short time tends to easily generate such defects as bubbles or surface irregularity. Therefore, drying time of 1 minute to 48 hours is preferable, 5 minutes to 10 hours is more preferable, and 10 minutes to 5 hours is further preferable. Control of humidity is also important, and relative humidity (RH) is preferably 25 to 100%, and more preferably 50 to 95%.

The coating liquid (dispersion liquid) in the coating process preferably contains a small amount of metal ions, and in particular, it contains a small amount of transition metal ions, especially an iron, nickel and cobalt ions. The content of transition metal ions is preferably 500 ppm or less, and more preferably 100 ppm or less. Therefore, solvents used in the aforementioned processes preferably contains these ions in a small amount, too.

Further, a surface treatment may be carried out after performing the coating process. As to the surface treatment, surface roughening, surface cutting, surface removing or surface coating may be performed, which may, in some cases, improve adherence with the solid electrolyte film or the porous conductive material.

Thickness of the catalyst layer included in the MEA of the invention is preferably 5 to 200 µm, and particularly preferably 10 to 100 µm.

In the production method of the membrane and electrode assembly, for example, the electrolyte membrane is assembled with the catalyst layer, the conductive layer and the like to prepare MEA. The preparation is not particularly limited, but known methods can be applied.

For manufacturing the MEA, following 4 methods are preferable.
(1) Proton conductive material coating method: wherein a catalyst paste (ink) containing an active platinum-supporting carbon, a proton conductive material and a solvent as fundamental components is directly coated on both sides of the solid electrolyte, to which porous conductive sheets are thermal compression-bonded (hot pressed) to manufacture an MEA of 5-layer structure.
(2) Porous conductive sheet coating method: wherein the catalyst paste is coated on the surface of the porous conductive sheet to form a catalyst layer, followed by thermal compression-bonding (hot pressing) with the electrolyte membrane to manufacture an MEA of 5-layer structure. This method is the same as the above-described (1) except that the type of support to be coated is not identical.
(3) Decal method: wherein the catalyst paste is coated on a support (such as a polytetrafluoroethylene (PTFE) sheet) to form a catalyst layer, followed by theremal compression-bonding (hot pressing) to transfer the catalyst layer alone to the electrolyte membrane to form a 3-layer MEA, to which a porous conductive sheet is pressure-bonded to manufacture an MEA of 5-layer structure.
(4) Later catalyst supporting method: wherein an ink, in which a carbon substance not supporting a platinum powder has been mixed with a proton conductive material, is coated on a solid electrolyte, a porous conductive sheet or PTFE to form a film, followed by impregnating platinum ions into the solid electrolyte and reducing the ion to precipitate a platinum powder in the film, thereby forming a catalyst layer. After the formation of the catalyst layer, an MEA is manufactured by the aforementioned methods (1) to (3).

In the above hot-pressing method, the following are preferred.
The electrolyte may be a proton type having sulfonic acid as a substituent, or may be a salt type in which sulfonic acid is in the form of a salt thereof, as in JP-A 2004-165096 and 2005-190702. The counter cation for the sulfonic acid in the salt type is preferably a monovalent or divalent cation, more preferably a monovalent cation. Concretely preferred are lithium, sodium, potassium, magnesium and potassium. Of the group of those cations and proton, plural ones may be selected and combined for use herein. Especially preferred are sodium salts, and potassium salts.

When the above-described salt is used, in addition, the following process is necessary.
In order to use it for a fuel cell, the solid electrolyte must have proton conductivity. For the purpose, by contacting the solid electrolyte with an acid, a salt substitution percentage thereof is reduced to 99% or less of that before the contact. Contact with an acid after joining the electrode catalyst and the polymer electrolyte film can recover lowering in moisture content and ion conductivity of the film caused by thermal history that is given during the electrode joining.

As a method for contacting with an acid, known methods such as immersion with or spraying an acidic aqueous solution such as hydrochloric acid, sulfuric acid, nitric acid and an organic sulfonic acid can be employed. Of these, the immersion method is preferable because it is simple and easy. A method of using a mineral acid such as hydrochloric acid, sulfuric acid and nitric acid is also preferable. A concentration of the acidic aqueous solution relies upon a state of lowering of ionic conductivity, an immersion temperature, an immersion time, etc. For example, an acidic aqueous solution of from 0.0001 to 5 N can be favorably used, with the range of from 0.1 to 2N being especially preferable. In many cases, when the immersion temperature is room temperature, the conversion can be thoroughly achieved. In case of shortening the immersion time, the acidic aqueous solution may be heated. In that case, the temperature is preferably in the range of from 30 to 100°C, and more preferably in the range of from 50 to 95°C. The immersion time relies upon the concentration and immersion temperature of the acidic aqueous solution, and the immersion can be favorably carried out for from about 10 minutes to 24 hours. From the viewpoint of productivity, the immersion time is preferably not more than 6 hours, and especially preferably not more than 4 hours. The amount of impurities contained in this acidic aqueous solution is preferably not more than 1 % by weight, and more preferably not more than 0.1 % by weight.

Such method may be also employed that a proton moving in the inside of the film functions as an acid upon operating a fuel cell to wash out a substituted cation, thereby allowing the film to exert a higher ion conductivity. A method for producing the fuel cell using the electrolyte membrane produced by such method is described.

A polymer electrolyte fuel cell is composed of a plurality of unit cells laminated via a cooling plate or the like, in which the unit cell comprises the membrane and electrode assembly produced in the manner as above, and, as disposed outside the assembly, a fuel distribution plate and an oxidant distribution plate as a groove-provided collector for forming a fuel channel and an oxidant channel outside. Of these, the collector (bipolar plate) is a graphite-made or metal-made channel forming material-cum-col.lector having a gas channel on the surface thereof, etc. A fuel cell stack can be prepared by inserting an assembly of an electrolyte membrane and a gas diffusion electrode between such collectors and laminating a plural number of the resulting materials.

Since a voltage of the single cell of the fuel cell is generally not more than 1.2 V, single cells are subjected to stacking in series and used in conformity with a necessary voltage of the load. As the method for stacking, "planar stacking" in which single cells are planarly disposed or "bipolar stacking" in which single cells are stacked via a separator having a fuel channel formed on the both sides thereof is employable. In the former, since the cathode electrode (air electrode) is exposed on the surface, air is easily taken in, and thinning can be achieved. Thus, the former is favorable for a small-sized fuel cell. Besides, a method in which stacking is achieved by microfabrication on a silicon wafer while applying an MEMS technology is proposed, too.

A higher operating temperature of a fuel cell is preferable, because catalyst activity enhances. But, ordinarily, it is operated at 50°C to 120°C, at which water content is easily controlled. Although a higher supply pressure of oxygen and hydrogen may be preferable because a fuel cell output increases, since probability of their contact through film breakage or the like also increases, the pressure is preferably controlled within a suitable range such as 1 to 3 atmospheric pressures.

As to the fuel which can be used for the fuel cell, examples of an anode fuel include hydrogen, alcohols (for example, methanol, isopropanol and methylene glycol) ethers (for example, dimethyl ether, dimethoxymethane and trimethoxymethane), forming acid, boron hydride complexes and ascorbic acid. Examples of a cathode fuel include oxygen (also including oxygen in the air) and hydrogen peroxide.

The method for supplying the foregoing anode fuel and cathode fuel into the respective catalyst layers includes two methods of (1) a method of forcedly circulating the fuel using an auxiliary machinery such as a pump (active type); and (2) a method not using an auxiliary machinery (for example, in case of a liquid, a capillary phenomenon or free drop; and in case of a gas, a passive type in which the catalyst layer is exposed to the air and the fuel is supplied). These methods can also be combined. While the former has advantages such as realization of a high output by pressurization and humidity control of a reaction gas or the like, it involves a drawback that it is difficult to achieve downsizing. While the latter has an advantage that downsizing is possible, it involves a drawback that a high output is hardly obtainable.

Various applications have been discussed about a fuel cell, including automobile use, household use and portable device use and the like. In particular, the hydrogen type fuel cell is expected as an energy source for various hot water-supplying and power generating apparatuses for home use, source of power for transport apparatuses, and an energy source for portable electronic devices, while utilizing the advantage of generating a high output. For example, the hot water-supplying and power generating apparatus to which it can be preferably applied includes home-use, collective housing-use and hospital-use apparatuses; the transport apparatus includes the automobile and marine vessel; and the portable device includes the cellular phone, mobile notebook computer and electronic still camera and the like. Examples of the suitably applicable portable device include a portable generator, outdoor lighting device and the like. In addition, it can preferably be used as a power source of a robot for industrial use or household use, or other toys and games. Furthermore, it is useful as a power source for charging a secondary battery mounted on these devices. In addition, an application as an emergency power source is also proposed.

### EXAMPLES

The present invention will be described more specifically below based on Examples. The material, use amount, percentage, treatment content, treatment procedure and the like represented in Examples below can be arbitrarily changed as long as the change results in no deviation from the intent of the invention. Accordingly, the scope of the invention is not restricted to the specific examples represented below.

### Examples (Production and Performance Evaluation of Fuel Cell)

(1) Preparation of electrolyte membrane:
   According to the same process as in Example 1 in JAP-A 2006-344578, prepared was an electrolyte membrane of a polymer having a benzene ring and a sulfo group connected to the benzene ring via a sulfur atom-containing alkyl group. Next, this was dissolved at 25°C in a mixed solvent of N,N-dimethylformamide/methanol to have a concentration of 15% by weight. The solution was cast on glass in a mode of spin coating, then dried with air, and further dried in vacuum at 80°C to form an electrolyte membrane having a mean thickness (dM) of 40 µm. The obtained polysulfone 1 had a mean ion exchange capacity of 1.2 milliequivalents/g.

(2) Preparation of silica fine particles having a hydrocarbon group or a fluorine-containing organic group in the surface thereof, and a dispersion thereof; and silica fine particles not having a hydrocarbon group or a fluorine-containing organic group in the surface thereof, and a dispersion thereof:
   Silica fine particles having a mean value of a primary particle diameter of 100 nm, 50 nm, 20 nm or 8 nm were mixed with 2-butanone in a ratio by weight of 3/7, and with dispersing them at room temperature in a nitrogen atmosphere, trifluoropropyltrimethoxysilane was added thereto in an amount of 1.5 × 10⁻⁴ mols pre gram of the silica fine particles. Next, this was boiled at 50°C for 1 hour, and pure water was added thereto in an amount of 6.6 g per gram of the silica fine particles, and further boiled at 50°C for 1 hour. The boiling temperature was elevated up to 70°C, and 2-butanone and water were evaporated away. The resulting product was dewatered in vacuum under at most 1 Pa at room temperature for 16 hours, then mixed with 2-butanone in a ratio by weight of 1/9, and again dispersed at room temperature to finally give a 10 wt.% dispersion of silica fine particles modified with a trifluoropropyl group in the surface thereof. On the other hand, silica fine particles having a mean value of a primary particle diameter of 20 nm were mixed with 2-butanone in a ratio by weight of 1/9, and with dispersing them at room temperature in a nitrogen atmosphere, hexyltrimethoxysilane was added thereto in an amount of 1.5 × 10⁻⁴ mols pre gram of the silica fine particles. Next, this was processed in the same manner as above, thereby producing a 10 wt. dispersion, of silica fine particles modified with a hexyl group in the surface thereof.
   Further, silica fine particles having a mean value of a primary particle diameter of 20 nm were mixed with 2-butanone in a ratio by weight of 1/9 and dispersed to prepare a 10 wt. % dispersion of silica fine particles. Almost all functional groups existing in the surface of the silica fine particles in the dispersion were hydroxyl groups, and a hydrocarbon group or a fluorine-containing organic group was not given thereto.

(3) Preparation of catalyst layer binder/silica fine particles mixed liquid:
   The dispersion of silica fine particles prepared in the above and a 5 mas. % solution of Nation 117 (by Aldrich), a binder in a catalyst layer were mixed and dispersed through irradiation with ultrasonic waves combined with stirring by a stirrer. In this stage, 2-butanone was previously suitably added to the 10 wt.% dispersion of silica fine particles to dilute the dispersion, and the mixed with the Nafion 117 solution. Even when the amount of the silica fine particles was varied, the mixing ratio (by weight) of the dispersion of silica fine particles and the Nafion 117 solution was all the time kept constant to be 4/6.

(4) Preparation of catalyst layer-coated support:
   A mixture of platinum-carrying carbon (carbon carrier: Vulcan XC72, platinum ratio by mass: 50%, manufactured by Tanaka Kikinzoku) (2.0g) and pure water (4.0g) was prepared, and this was mixed with the previously-prepared, catalyst layer binder/silica fine particles mixed liquid (26.6 g), and dispersed for 60 minutes through irradiation with ultrasonic waves combined with stirring by a stirrer. The resulting dispersion was applied onto a reinforcing material-incorporated PTFE film support (manufactured by Saint-Gobain) to be a platinum coating amount of 0.20 mq/cm², and then dried at room temperature to prepare a catalyst layer-coated support. Thus prepared, the catalyst layer-coated support was blanked into a predetermined size for use in the process of producing a membrane and electrode assembly to be mentioned below.

(5) Production of membrane and electrode assembly:
   The catalyst layer-coated support prepared in the above (4) was stuck to both sides of the electrolyte membrane prepared in the above (1) in such a manner that coated face of the former could face the electrolyte membrane. Next, this was hot pressed at 125°C under 3 MPa for 10 minutes, and while pressed, this was cooled and then the PTFE film support was peeled off. This was dipped in 0.5 M sulfuric acid at room temperature for 24 hours, and then washed with water at room temperature to produce a membrane and electrode assembly. In the same manner as above but the type of the catalyst layer to be on the anode electrode side and on the cathode electrode side was changed as in Table 1, samples (101) to (111) of a membrane and electrode assembly were produced.

**[Table 1]**

| Sample No. | Specification of Catalyst Layer on Cathode Electrode Side | | | | | Specification of Catalyst Layer on Anode Electrode Side | |
|---|---|---|---|---|---|---|---|
| | platinum coating amount, (mg/cm²) | content of silica fine particles (wt.%) | mean diameter of primary particles of silica fine particles (nm) | number of surface-modifyin g groups in silica fine particles (mol/g of silica) | type of surface-modifying su group | platinum coating amount, (Mg/cm²) | content of silica fine parties (Wt.%) |
| 101 (invention) | 0.20 | 0.6 | 20 | 1.1×10⁻⁴ | trifluoropropyl group | 0.20 | 0 |
| (invention) | 0.20 | 2.0 | 20 | 1.1×10⁴ | trifluoropropyl group | 0.20 | 0 |
| 103 (invention) | 0.20 | 6.0 | 20 | 1,1×10⁻⁴ | trifluoropropyl group | 0,20 | 0 |
| 104 (invention) | 0.20 | 12.0 | 20 | 1.1×10⁻⁴ | trifluoropropyl group | 0.20 | 0 |
| 105 (invention) | 0.20 | 25.0 | 20 | 1.1×10⁻⁴ | trifluoropropyl group | 0.20 | 0 |
| 106 (invention) | 0.20 | 6.0 | 100 | 1.1×10⁻⁴ | trifluoropropyl group | 0.20 | 0 |
| 107 (invention) | 0.20 | same as above | 50 | 1.1×10⁻⁴ | trifluoropropyl group | 0.20 | 0 |
| 108 (invention) | 0.20 | same as above | 8 | 1.1×10⁻⁴ | trifluoropropyl group | 0.20 | 0 |
| 109 (invention) | 0.20 | same as above | 20 | 1.1×10⁻⁴ | hexyl group | 0.20 | 0 |
| 110 companion | 0.20 | same as above | 20 | not modified | - - - - - | 0.20 | 0 |
| 111 (comparison) | 0.20 | 0 | ----- | ----- | ----- | 0.20 | 0 |

(6) Evaluation of Fuel Cell Performance:
   On the membrane and electrode assembly (101) to (111) produced in the above, a gas diffusion electrode (conductive layer) (by E-TEK) was laminated. This was set in a standard fuel cell test cell (by Electrochem), and the test cell was connected to a fuel cell evaluation system (As-510 by NF Circuit Planning Block).
   Humidified hydrogen gas was applied to the anode electrode side and humidified imitation air was to the cathode electrode side, and the system was driven until the voltage became stable. The supply backpressure of the hydrogen gas and the imitation air was 2 atmospheres. A load was given between the anode electrode 12 and the cathode electrode 13, and the current-voltage profile was recorded.
   The temperature and the humidity inside the cell were in two different modes of 90°C/100 RH and 90°C/75% RH, and under the condition, the cells were tested fro the characteristics thereof. Table 2 shows (1) output voltage at 90°C/100% RH and at a current density of 1.0A/cm², (2) output voltage at 90°C/100% RH and at a current density of 1.23 A/cm² and (3) output voltage at 90°C/75% RH and at a current density of 1.0 A/cm² of each sample.
      (1) This is a driving condition to give a nearly the highest power in full humidification at 90°C.
      (2) This is a driving condition to cause output depression owing to excessive moisture in the catalyst layer on the cathode electrode side, since the current density was high under full humidification at 90°C.
      (3) This is a performance index in the positioning that the driving condition was shifted to low humidification at 90°C. In every case, the samples having a high output voltage are good.

**[Table 2]**

| Sample No. | Specification of Catalyst Layer on Cathode Electrode Side | | | | Output Voltage (V) | | |
|---|---|---|---|---|---|---|---|
| | content of silica fine particles (wt.%) | mean diameter of primary particles of silica fine particles (nm) | number of surface-modifyin g groups in silica fine particles (mol/g of silica) | type of surface-modifying group | Condition (1) | Condition (2) | Condition (3) |
| | | | | | cell temperature/ humidity: 90°C/100% RH current density:1.0 A/cm² | cell temperature/ humidity: 90°C/100% RH current density;1.25 A/cm² | cell temperature/ humidity: 90°C/75% RH current density: 1.0 A/cm² |
| (101) (invention) | 0.6 | 20 | 1.1×10⁻⁴ | trifluoropropyl group | 0.60 | 0.43 | 0.47 |
| 102 (invention) | 2.0 | 20 | 1.1×10⁻⁴ | trifluoropropyl group | 0.63 | 0.46 | 0.51 |
| 103 (invention) | 6.0 | 20 | 1.1×1⁻⁴ | trifluoropropyl group | 0.65 | 0.49 | 0.54 |
| 104 (invention) | 12.0 | 20 | 11×10⁻⁴ | trifluoropropyl group | 0.64 | 0.50 | 0.52 |
| 105 (invention) | 25.0 | 20 | 1.1×10⁻⁴ | trifluoropropyl group | 0.62 | 0.50 | 0.50 |
| 106 (invention) | 6.0 | 100 | 1.1×10⁻⁴ | trifluoropropyl group | 0.59 | 0.43 | 0.46 |
| 107 (invention) | 6,0 | 50 | 1.1×10⁻⁴ | trifluoropropyl group | 0.62 | 0.46 | 0.50 |
| 108 (invention) | 6.0 | 8 | 1.1×10⁻⁴ | trifluoropropyl group | 0.65 | 0.50 | 0.55 |
| 109 (invention) | 6.0 | 20 | 1.1×10⁻⁴ | hexyl group | 0.63 | 0.47 | 0.55 |
| 110 (comparison) | 6.0 | 20 | not modified | ----- | 0.56 | 0.35 | 0.51 |
| 111 (comparison) | | ------ | ------ | ----- | 0.59 | 0.40 | 0.44 |

(7) Result:
   From the data in Table 2, it is known that, when silica fine particles having a hydrocarbon group or a fluorine-containing organic group in the surface thereof were added to the catalyst layer on the cathode electrode side, the output characteristics of the cells were good under both humidification conditions of the above-mentioned (1) full humidification and (3) low humidification. In the above-mentioned (2) high-current density region under full humidification in which output reduction may often occur owing to excessive moisture, it was confirmed that the samples of the invention kept high output power as compared with the comparative samples, as the output voltage reduction from the temperature/humidity condition of the above (2) was small.
   It has been clarified that the effect of the invention greatly depends on the primary particle diameter of the silica fine particles sued in the invention and is remarkable when the mean diameter of the primary particles is at most 50 nm, and that, when the mean diameter is reduced, then the output level under low humidification condition especially increases. This result is hardly anticipatable from conventional knowledge.

### [Industrial Applicability]

In the membrane and electrode assembly of the invention, the water retention in the catalyst layer on the cathode electrode side is suitably controlled, and the assembly can stably keep high output level even in fluctuating humidification conditions. Accordingly, the applicability of the assembly to fuel cells under various conditions is expected.

## Claims

1. A membrane and electrode assembly comprising a pair of electrodes and an electrolyte membrane provided between the electrodes, wherein the side of each electrode adjacent to the electrolyte membrane is formed by a catalyst layer, and at least one catalyst layer comprises silica fine particles having a hydrocarbon group or a fluorine-containing organic group in the surface thereof.

2. The membrane and electrode assembly according to Claim 1, wherein the mean value of the primary particle diameter of the silica fine particles is at most 50 nm.

3. The membrane and electrode assembly according to Claim 1 or 2, wherein the silica fine particles are in the catalyst layer in an amount of from 0.6 to 25% by weight.

4. The membrane and electrode assembly according to any one of Claims 1 to 3, wherein the fluorine-containing organic group is a monovalent organic group having at least two fluorine atoms and has from 3 to 16 carbon atoms.

5. The membrane and electrode assembly according to any one of Claims 1 to 3, wherein the fluorine-containing organic group is a polyfluoroalkyl group, a polyfluorooxaalkyl group, a polyfluorothioxaalkyl group, or an organic group composed of any of these groups and a divalent hydrocarbon group bonding thereto.

6. The membrane and electrode assembly according to any one of Claims 1 to 5, wherein the silica fine particles have the hydrocarbon group or the fluorine-containing organic group in an amount of from 1.5 × 10⁻⁶ to 1.5 × 10⁻³ mols per gram of the particles.

7. The membrane and electrode assembly according to any one of Claims 1 to 6, wherein the catalyst layer comprising the silica fine particles is provided on a cathode electrode.

8. A fuel cell comprising the membrane and electrode assembly of any one of Claims 1 to 7.
